(19) Europäisches Patentamt
European Patent Office
Office européen des brevets

(11) EP 3 900 948 B1

(12) **EUROPEAN PATENT SPECIFICATION**

(45) Date of publication and mention of the grant of the patent:
**08.07.2026 Bulletin 2026/28**

(21) Application number: **19897635.9**

(22) Date of filing: **12.12.2019**

(51) International Patent Classification (IPC):
***C08L 9/06*** *(2006.01)* ***C08L 21/00*** *(2006.01)*
***B60C 1/00*** *(2006.01)* ***C08K 3/013*** *(2018.01)*
***C08L 15/00*** *(2006.01)*

(52) Cooperative Patent Classification (CPC):
(C-Sets available)
**C08L 15/00; B60C 1/00; C08L 21/00;** C08L 9/06
(Cont.)

(86) International application number:
**PCT/JP2019/048809**

(87) International publication number:
**WO 2020/129821 (25.06.2020 Gazette 2020/26)**

(54) **RUBBER COMPOSITION**

KAUTSCHUKZUSAMMENSETZUNG

COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2018 JP 2018235436**

(43) Date of publication of application:
**27.10.2021 Bulletin 2021/43**

(73) Proprietor: **Kuraray Co., Ltd.**
**Kurashiki-shi, Okayama 710-0801 (JP)**

(72) Inventors:
- **KODA, Daisuke**
  **Kamisu-shi, Ibaraki 314-0197 (JP)**
- **UENO, Yoshikazu**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

(56) References cited:
**EP-A1- 1 514 901**
**EP-A1- 1 544 241**
**EP-A1- 1 612 241**
**EP-A1- 1 975 199**
**EP-A1- 3 070 120**
**EP-A1- 3 326 838**
**EP-A1- 3 385 318**
**EP-A2- 1 535 959**
**WO-A1-2015/064646**
**JP-A- 2005 225 946**
**JP-A- 2006 213 809**
**JP-A- 2007 161 817**
**JP-A- 2008 184 517**
**JP-A- 2008 231 207**
**JP-A- 2008 274 120**
**JP-A- 2018 177 920**
**JP-A- H07 238 187**
**JP-A- H09 227 723**
**US-A1- 2017 240 731**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08L 9/06, C08L 9/06, C08L 9/06, C08K 3/36,
C08K 3/04

## Description

### TECHNICAL FIELD

The present invention relates to a rubber composition, a crosslinked product of the rubber composition, and a pneumatic tire at least partially including the rubber composition.

### BACKGROUND ART

Adding a low-molecular weight polymer including conjugated diene units is a conventional approach to improving properties of crosslinked products of solid rubbers while attaining improvements in properties such as processability of the solid rubbers. For example, the addition of such polymers has been considered in many studies for purposes such as to enhance incompatible properties of rubber compositions for use in tires.

For example, Patent Literatures 1 and 3 disclose rubber compositions and related products which are designed to offer enhanced steering stability of tires without deterioration in fracture characteristics, wherein the rubber compositions combine a specific high-molecular weight, partially hydrogenated diene polymer and a low-molecular weight diene polymer.

Patent Literature 2 discloses rubber compositions and related products which are designed to achieve enhancements in grip performance, grip performance durability and abrasion resistance, wherein the rubber compositions include a rubber component including a styrene butadiene rubber, a specific zinc oxide, and a liquid styrene butadiene rubber having a specific weight average molecular weight.

Further, Patent Literature 4 describes a pneumatic tire formed from a specific rubber composition.

Further, Patent Literature 5 describes a rubber composition capable of balancing steering stability, wear resistance and fracture characteristics of a tire at high levels by using in a tread rubber.

Further, Patent Literature 6 describes a polymer composite and a method for producing the same, as well as a rubber composition for tires and a pneumatic tire.

Further, Patent Literature 7 describes a rubber composition for a tire and a tire using the same.

Further, Patent Literature 8 describes a rubber composition suitable as a tread rubber of a pneumatic tire allegedly having good wear resistance and fracture properties and a further improved gripping property.

Further, Patent Literature 9 describes a rubber composition in which abrasion resistance and gripping performance are allegedly improved in a balanced manner and bleeding of the components is inhibited, and a tire using the composition.

Further, Patent Literature 10 describes a tire having a tread composed of a predetermined rubber composition and allegedly having both excellent wear resistance (abrasion resistance) and grip performance.

Further, Patent Literature 11 describes a pneumatic tire formed from a specific rubber composition.

Further, Patent Literature 12 describes a rubber composition which, when the rubber composition is used for a tire, can allegedly exhibit an excellent road gripping property even when the temperature at the surface of the tread is low and a tire made by using the rubber composition.

Further, Patent Literature 13 describes a rubber composition and a tire using the same.

Further, Patent Literature 14 describes rubber compositions and tires.

Further, Patent Literature 15 describes a rubber composition and a tire using the same.

Further, Patent Literature 16 describes a rubber composition for tires.

Further, Patent Literature 17 describes a rubber composition suitable for the tread of a pneumatic tire and a pneumatic tire using the same.

Further, Patent Literature 18 describes a rubber composition and a pneumatic tire using the rubber composition as a tread rubber.

Lastly, Patent Literature 19 describes a rubber composition and a pneumatic tire using the rubber composition.

### CITATION LIST

### PATENT LITERATURE

Patent Literature 1: WO 2007/081026
Patent Literature 2: JP 2011 153219 A
Patent Literature 3: JP 2006 213807 A
Patent Literature 4: US 2017/240731 A1

Patent Literature 5: EP 1 975 199 A1
Patent Literature 6: EP 3 070 120 A1
Patent Literature 7: EP 1 535 959 A2
Patent Literature 8: EP 1 544 241 A1
Patent Literature 9: EP 1 612 241 A1
Patent Literature 10: EP 3 385 318 A1
Patent Literature 11: EP 3 326 838 A1
Patent Literature 12: EP 1 514 901 A1
Patent Literature 13: JP 2005 225946 A
Patent Literature 14: JP 2018 177920 A
Patent Literature 15: JP 2008 274120 A
Patent Literature 16: JP 2007 161817 A
Patent Literature 17: JP 2008 184517 A
Patent Literature 18: JP 2006 213809 A
Patent Literature 19: JP 2008 231207 A

## SUMMARY OF INVENTION

### TECHNICAL PROBLEM

Unfortunately, the rubber compositions described in Patent Literatures 1 to 3 do not attain sufficient enhancements in tensile strength of crosslinked products and require further improvements.
The present invention has been made in view of the circumstances discussed above, and provides a rubber composition which can give a crosslinked product with enhanced tensile strength, and a pneumatic tire including the rubber composition as a portion thereof.

### SOLUTION TO PROBLEM

As a result of extensive studies, the present inventors have found that a rubber composition which includes components including a specific hydrogenated aromatic vinyl-conjugated diene random copolymer can give crosslinked products having excellent tensile strength. The present invention has been completed based on the finding.
Specifically, the present invention pertains to the subject matter set out in the appended set of claims.

### ADVANTAGEOUS EFFECTS OF INVENTION

The rubber composition obtained according to the present invention can give crosslinked products having excellent tensile strength.

## DESCRIPTION OF EMBODIMENTS

### [Solid rubbers (A)]

A solid rubber (A) used in a rubber composition of the present invention is a rubber which is not a hydrogenated aromatic vinyl-conjugated diene random copolymer (B) and which can be handled as a solid at 20°C. The Mooney viscosity $ML_{1+4}$ of the solid rubber (A) at 100°C may be in the range of 20 to 200. This rubber may be at least one selected from natural rubbers, styrene butadiene rubbers (hereinafter, also written as "SBRs"), butadiene rubbers (hereinafter, also written as "BRs") and isoprene rubbers.
Of these solid rubbers (A), natural rubbers, butadiene rubbers and SBRs are preferable; and SBRs are more preferable. The solid rubbers (A) may be used singly, or two or more may be used in combination.
For example, the SBRs may be any such rubbers generally used in tire applications. Specifically, those rubbers having a styrene content of 0.1 to 70 mass% are preferable, and the styrene content is more preferably 5 to 60 mass%, still more preferably 5 to 50 mass%, further preferably 5 to 40 mass%, particularly preferably 5 to 30 mass%, and most preferably 5 to 25 mass%. Further, those rubbers having a vinyl content of 0.1 to 80 mol% are preferable, and those having a vinyl content of 5 to 70 mol% are more preferable.
The vinyl content in the SBRs in the present specification means the content of vinyl group-containing monomer units relative to all the butadiene-derived units contained in the SBR. Similarly, the vinyl content in the solid rubber (A) described later means the content of monomer units which actually have a vinyl group relative to the total amount of units from a monomer which can have a vinyl group depending on the bonding pattern.

The weight average molecular weight (Mw) of the SBRs is preferably 100,000 to 2,500,000, more preferably 150,000 to 2,000,000, and still more preferably 150,000 to 1,500,000. This range of the weight average molecular weight (Mw) of the SBR ensures that the rubber composition attains enhanced processability and can give crosslinked products which exhibit excellent mechanical strength and abrasion resistance, and also ensures that the rubber composition used in, for example, tires offers enhanced steering stability and wet grip performance. In the present specification, the weight average molecular weight is the polystyrene equivalent weight average molecular weight measured by gel permeation chromatography (GPC).

The glass transition temperature (Tg) of the SBRs measured by differential thermal analysis may be not more than -10°C, preferably not more than -20°C, more preferably not more than -30°C, still more preferably not more than -40°C, further preferably not more than -45°C, particularly preferably not more than -50°C, and most preferably not more than -55°C. When the glass transition temperature is in this range, the rubber composition gives crosslinked products which exhibit enhanced flexibility at low temperatures and thus attain enhancements in, for example, ice grip performance.

SBR which may be used in the invention may be obtained by copolymerizing styrene and butadiene. The SBR production process is not particularly limited and may be any of emulsion polymerization, solution polymerization, gas-phase polymerization and bulk polymerization. Of these production processes, emulsion polymerization and solution polymerization are preferable.

An emulsion-polymerized styrene butadiene rubber (hereinafter, also written as E-SBR) may be produced by a usual emulsion polymerization process that is known or is deemed as known. For example, such a rubber may be obtained by emulsifying and dispersing prescribed amounts of styrene and butadiene monomers in the presence of an emulsifier and emulsion polymerizing the monomers with a radical polymerization initiator.

Examples of the emulsifiers which may be used include long-chain fatty acid salts having 10 or more carbon atoms, and rosin acid salts. Specific examples include potassium salts and sodium salts of fatty acids such as capric acid, lauric acid, myristic acid, palmitic acid, oleic acid and stearic acid.

Usually, water is used as the dispersion medium. The dispersion medium may include a water-soluble organic solvent such as methanol or ethanol as long as the stability during the polymerization is not impaired.

Examples of the radical polymerization initiators include persulfate salts such as ammonium persulfate and potassium persulfate, organic peroxides and hydrogen peroxide.

To control the molecular weight of the E-SBR that is obtained, a chain transfer agent may be used. Examples of the chain transfer agents include mercaptans such as t-dodecylmercaptan and n-dodecylmercaptan; carbon tetrachloride, thioglycolic acid, diterpene, terpinolene, $\gamma$-terpinene and $\alpha$-methylstyrene dimer.

The temperature of the emulsion polymerization may be selected appropriately in accordance with the type of the radical polymerization initiator used. In usual cases, the temperature is preferably 0 to 100°C, and more preferably 0 to 60°C. The polymerization mode may be continuous or batchwise. The polymerization reaction may be terminated by the addition of a polymerization terminator.

Examples of the polymerization terminators include amine compounds such as isopropylhydroxylamine, diethylhydroxylamine and hydroxylamine; quinone compounds such as hydroquinone and benzoquinone; and sodium nitrite.

The termination of the polymerization reaction may be followed by the addition of an antioxidant as required. After the termination of the polymerization reaction, the latex obtained is cleaned of the unreacted monomers as required, and the polymer is coagulated by the addition of a coagulant salt such as sodium chloride, calcium chloride or potassium chloride optionally together with an acid such as nitric acid or sulfuric acid to control the pH of the coagulated system to a predetermined value. The dispersion medium is then separated, thereby recovering the polymer as crumb. The crumb is washed with water, then dehydrated, and dried with a band dryer or the like to give E-SBR. During the coagulation process, the latex may be mixed together with an emulsified dispersion of an extender oil as required, and the rubber may be recovered as an oil-extended rubber. It is noted that an extender oil is not regarded as a component of the solid rubber (A) in the rubber composition in the present specification.

Examples of the commercially available E-SBRs include oil-extended styrene butadiene rubber "JSR1723" manufactured by JSR Corporation.

A solution-polymerized styrene butadiene rubber (hereinafter, also written as S-SBR) may be produced by a usual solution polymerization process. For example, styrene and butadiene are polymerized in a solvent with an active metal capable of catalyzing anionic polymerization optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene and toluene. It is usually preferable to use the solvent in such an amount that the monomer concentration will be 1 to 50 mass%.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of these active metals, alkali metals and alkaline earth metals are preferable, and alkali metals are more preferable. Of the alkali metals, organoalkali metal compounds are more preferably used.

Examples of the organoalkali metal compounds include organomonolithium compounds such as n-butyllithium, sec-butyllithium, t-butyllithium, hexyllithium, phenyllithium and stilbenelithium; polyfunctional organolithium compounds such as dilithiomethane, 1,4-dilithiobutane, 1,4-dilithio-2-ethylcyclohexane and 1,3,5-trilithiobenzene; sodium naphthalene and potassium naphthalene. In particular, organolithium compounds are preferable, and organomonolithium compounds are more preferable. The amount in which the organoalkali metal compounds are used may be determined appropriately in accordance with the desired molecular weight of S-SBR. The organoalkali metal compound may be used in the form of an organoalkali metal amide by being subjected to a reaction with a secondary amine such as dibutylamine, dihexylamine or dibenzylamine.

The polar compounds are not particularly limited as long as the compounds do not deactivate the anionic polymerization reaction and are generally used for the purposes of controlling the microstructure of butadiene units and controlling the distribution of styrene in copolymer chains. Examples include ether compounds such as dibutyl ether, tetrahydrofuran and ethylene glycol diethyl ether; tertiary amines such as tetramethylethylenediamine and trimethylamine; alkali metal alkoxides; and phosphine compounds.

The temperature of the polymerization reaction is usually in the range of -80 to 150°C, preferably 0 to 100°C, and more preferably 30 to 90°C. The polymerization mode may be batchwise or continuous. To enhance the random copolymerizability of styrene and butadiene, it is preferable to supply styrene and butadiene into the reaction liquid continuously or intermittently so that styrene and butadiene in the polymerization system will have a specific composition ratio.

The polymerization reaction may be terminated by the addition of an alcohol such as methanol or isopropanol as a polymerization terminator. After the termination of the polymerization reaction, the target S-SBR may be recovered by separating the solvent from the polymerization solution by a method such as direct drying or steam stripping. The polymerization solution may be mixed together with an extender oil before the removal of the solvent, and the rubber may be recovered as an oil-extended rubber.

As long as the advantageous effects of the invention are not impaired, the SBR may be a modified SBR obtained by introducing functional groups into SBR. Examples of the functional groups include amino groups, alkoxysilyl groups, hydroxyl groups, epoxy groups and carboxyl groups.

For example, the modified SBR may be produced by adding, before the addition of the polymerization terminator, an agent capable of reacting with active ends of the polymer, for example, a coupling agent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane or 2,4-tolylene diisocyanate, a chain end-modifying agent such as 4,4'-bis(diethylamino)benzophenone or N-vinylpyrrolidone, or any of the modifying agents described in JP-A-2011-132298. In the modified SBR, the functional groups may be introduced at polymer ends or polymer side chains.

Examples of the isoprene rubbers which may be used include commercially available isoprene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed isoprene rubbers are preferable because they have a high cis content. Use may be made of ultrahigh cis isoprene rubbers obtained using lanthanoid rare earth metal catalysts.

The vinyl content in the isoprene rubbers is preferably not more than 50 mol%, more preferably not more than 40 mol%, and still more preferably not more than 30 mol%. If the vinyl content exceeds 50 mol%, the rolling resistance performance tends to deteriorate. The lower limit of the vinyl content is not particularly limited. The glass transition temperature, although variable depending on the vinyl content, is preferably not more than -20°C, and more preferably not more than -30°C.

The weight average molecular weight (Mw) of the isoprene rubbers is preferably 90,000 to 2,000,000, and more preferably 150,000 to 1,500,000. This Mw ensures that high processability and mechanical strength are obtained.

As long as the advantageous effects of the invention are not impaired, the isoprene rubbers may have branched partial structures or polar functional groups that are introduced by using polyfunctional modifiers, for example, tin tetrachloride, silicon tetrachloride, alkoxysilanes having an epoxy group in the molecule, or amino group-containing alkoxysilanes.

Examples of the butadiene rubbers which may be used include commercially available butadiene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed butadiene rubbers are preferable because they have a high cis content. Use may be made of ultrahigh cis butadiene rubbers (for example, 95% or more cis content) obtained using lanthanoid rare earth metal catalysts.

The vinyl content in the butadiene rubbers is preferably not more than 50 mol%, more preferably not more than 40 mol%, and still more preferably not more than 30 mol%. If the vinyl content exceeds 50 mol%, the rolling resistance performance (low fuel consumption performance) and the abrasion resistance tend to deteriorate. The lower limit of the vinyl content is not particularly limited. The glass transition temperature, although variable depending on the vinyl content, is preferably not more than -40°C, and more preferably not more than -50°C.

The weight average molecular weight (Mw) of the butadiene rubbers is preferably 90,000 to 2,000,000, and more preferably 150,000 to 1,500,000. When the Mw is in this range, the rubber composition attains enhanced processability, and products, for example, tires including the rubber composition at least as portions thereof achieve enhancements in ice grip performance, abrasion resistance and steering stability.

As long as the advantageous effects of the invention are not impaired, the butadiene rubbers may have branched partial structures or polar functional groups that are introduced by using polyfunctional modifiers, for example, tin tetrachloride, silicon tetrachloride, alkoxysilanes having an epoxy group in the molecule, or amino group-containing alkoxysilanes.

At least one of the SBRs, the isoprene rubbers and the butadiene rubbers may be used in combination with one, or two or more of, for example, butyl rubbers, halogenated butyl rubbers, ethylene propylene diene rubbers, butadiene acrylonitrile polymer rubbers and chloroprene rubbers. These rubbers may be produced by any methods without limitation, or may be purchased from the market.

Examples of the natural rubbers include those natural rubbers, high-purity natural rubbers and modified natural rubbers such as epoxidized natural rubbers, hydroxylated natural rubbers, hydrogenated natural rubbers and grafted natural rubbers generally used in the tire industry, with specific examples including TSRs (technically specified rubbers) such as SMRs (TSRs from Malaysia), SIRs (TSRs from Indonesia) and STRs (TSRs from Thailand), and RSSs (ribbed smoked sheets). In particular, SMR 20, STR 20 and RSS #3 are preferable from the points of view of uniform quality and high availability. The natural rubbers may be used singly, or two or more may be used in combination. In the present invention, the synthetic rubbers and the natural rubbers may be used together.

[Hydrogenated aromatic vinyl-conjugated diene random copolymers (B)]

A hydrogenated aromatic vinyl-conjugated diene random copolymer (B) (hereinafter, also written simply as the random copolymer (B)) used in the rubber composition of the present invention is a hydrogenated product of a random copolymer of a conjugated diene and an aromatic vinyl, and has a weight average molecular weight (Mw) in the range of not less than 7,500 and not more than 20,000, a content of aromatic vinyl units of not less than 39 mass% and not more than 55 mass%, a vinyl content in conjugated diene units of 30 to 65 mol% before hydrogenation of the random copolymer (B), and a hydrogenation ratio of the conjugated diene units of not less than 50 mol% and not more than 80 mol%. In the rubber composition of the present invention, the random copolymer (B) enhances the tensile strength of obtainable crosslinked products as compared to when use is made of a polymer including conjugated diene units which has a similar weight average molecular weight.

Conjugated diene units of an unhydrogenated aromatic vinyl-conjugated diene random copolymer (B') that is the raw material of the random copolymer (B) are butadiene monomer units.

The unhydrogenated aromatic vinyl-conjugated diene random copolymer (B') that is the raw material of the random copolymer (B) includes aromatic vinyl compound (b2) units as monomer units constituting the polymer. Examples of the aromatic vinyl compounds (b2) include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. Of these aromatic vinyl compounds, styrene, $\alpha$-methylstyrene and 4-methylstyrene are preferable.

The unhydrogenated random copolymer (B') may include additional monomer units other than the conjugated diene units and the aromatic vinyl compound (b2) units.

The unhydrogenated random copolymer (B') is preferably a polymer obtained by polymerizing butadiene monomer units, an aromatic vinyl compound and optionally additional monomers by a process such as, for example, emulsion polymerization or solution polymerization.

The emulsion polymerization process may be a known process or a process that is deemed as known. For example, monomers including a prescribed amount of the conjugated diene may be emulsified and dispersed in the presence of an emulsifier and may be emulsion polymerized with use of a radical polymerization initiator.

Examples of the emulsifiers include long-chain fatty acid salts having 10 or more carbon atoms, and rosin acid salts. Examples of the long-chain fatty acid salts include potassium salts and sodium salts of fatty acids such as capric acid, lauric acid, myristic acid, palmitic acid, oleic acid and stearic acid.

Usually, water is used as the dispersion medium. The dispersion medium may include a water-soluble organic solvent such as methanol or ethanol as long as the stability during the polymerization is not impaired.

Examples of the radical polymerization initiators include persulfate salts such as ammonium persulfate and potassium persulfate, organic peroxides and hydrogen peroxide.

To control the molecular weight of the obtainable unhydrogenated random copolymer (B'), a chain transfer agent may be used. Examples of the chain transfer agents include mercaptans such as t-dodecylmercaptan and n-dodecylmercaptan; carbon tetrachloride, thioglycolic acid, diterpene, terpinolene, $\gamma$-terpinene and $\alpha$-methylstyrene dimer.

The temperature of the emulsion polymerization may be selected appropriately in accordance with, for example, the type of the radical polymerization initiator used. The temperature is usually in the range of 0 to 100°C, and preferably in the range of 0 to 60°C. The polymerization mode may be continuous or batchwise.

The polymerization reaction may be terminated by the addition of a polymerization terminator. Examples of the polymerization terminators include amine compounds such as isopropylhydroxylamine, diethylhydroxylamine and hydroxylamine, quinone compounds such as hydroquinone and benzoquinone, and sodium nitrite.

The termination of the polymerization reaction may be followed by the addition of an antioxidant as required. After the termination of the polymerization reaction, the latex obtained is cleaned of the unreacted monomers as required, and the unhydrogenated random copolymer (B') is coagulated by the addition of a coagulant salt such as sodium chloride, calcium chloride or potassium chloride optionally together with an acid such as nitric acid or sulfuric acid to control the pH of the coagulated system to a predetermined value. The dispersion medium is then separated, thereby recovering the polymer. Next, the polymer is washed with water, dehydrated and dried. In this manner, the unhydrogenated random copolymer (B') may be obtained. During the coagulation process, the latex may be mixed together with an emulsified dispersion of an extender oil as required, and the unhydrogenated random copolymer (B') may be recovered as an oil-extended rubber.

The solution polymerization process may be a known process or a process that is deemed as known. For example, monomers including the conjugated diene are polymerized in a solvent with a Ziegler catalyst, a metallocene catalyst or an active metal or an active metal compound capable of catalyzing anionic polymerization, optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene, toluene and xylene.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of the active metals capable of catalyzing anionic polymerization, alkali metals and alkaline earth metals are preferable, and alkali metals are more preferable.

Preferred active metal compounds capable of catalyzing anionic polymerization are organoalkali metal compounds. Examples of the organoalkali metal compounds include organomonolithium compounds such as methyllithium, ethyllithium, n-butyllithium, sec-butyllithium, t-butyllithium, hexyllithium, phenyllithium and stilbenelithium; polyfunctional organolithium compounds such as dilithiomethane, dilithionaphthalene, 1,4-dilithiobutane, 1,4-dilithio-2-ethylcyclohexane and 1,3,5-trilithiobenzene; sodium naphthalene and potassium naphthalene. Of these organoalkali metal compounds, organolithium compounds are preferable, and organomonolithium compounds are more preferable.

The amount in which the organoalkali metal compounds are used may be determined appropriately in accordance with factors such as the melt viscosities and molecular weights of the unhydrogenated random copolymer (B') and the hydrogenated aromatic vinyl-conjugated diene random copolymer (B). Usually, the amount of such compounds is 0.01 to 3 parts by mass per 100 parts by mass of all the monomers including the conjugated diene.

The organoalkali metal compound may be used in the form of an organoalkali metal amide by being subjected to a reaction with a secondary amine such as dibutylamine, dihexylamine or dibenzylamine.

The polar compounds are usually used in the anionic polymerization for the purpose of controlling the microstructure (for example, the vinyl content) of conjugated diene units without deactivating the reaction. Examples of the polar compounds include ether compounds such as 2,2-di(2-tetrahydrofuryl)propane (DTHFP), dibutyl ether, tetrahydrofuran and ethylene glycol diethyl ether; tertiary amines such as N,N,N',N'-tetramethylethylenediamine and trimethylamine; alkali metal alkoxides and phosphine compounds. The polar compounds are usually used in an amount of 0.01 to 1000 mol per mol of the organoalkali metal compound.

By increasing the amount of the polar compound added relative to that of the organoalkali metal compound, the randomness of the copolymer may be increased.

The temperature of the solution polymerization is usually in the range of -80 to 150°C, preferably 0 to 100°C, and more preferably 10 to 90°C. The polymerization mode may be batchwise or continuous.

The polymerization reaction may be terminated by the addition of a polymerization terminator. Examples of the polymerization terminators include alcohols such as methanol and isopropanol. The unhydrogenated random copolymer (B') may be isolated by pouring the polymerization reaction liquid into a poor solvent such as methanol to precipitate the unhydrogenated random copolymer (B'), or by washing the polymerization reaction liquid with water followed by separation and drying.

Of the processes described above for the production of the unhydrogenated random copolymer (B'), the solution polymerization process is preferable.

The unhydrogenated random copolymer (B') may be hydrogenated at its carbon-carbon double bonds present in the conjugated diene units by a method that is known or is deemed as known. For example, the unhydrogenated random copolymer (B') may be dissolved into a solvent that is inert to a hydrogenation catalyst and may be reacted with hydrogen, that is, hydrogenated in the presence of a hydrogenation catalyst in the solution.

Examples of the hydrogenation catalysts include Raney nickel; heterogeneous catalysts in which a metal such as Pt, Pd, Ru, Rh or Ni is supported on a carrier such as carbon, alumina or diatomaceous earth; Ziegler catalysts that include a transition metal compound in combination with, for example, an alkylaluminum compound or an alkyllithium compound; and metallocene catalysts. The hydrogenation reaction is not particularly limited as long as the carbon-carbon double bonds derived from the conjugated diene compound may be hydrogenated in a controlled manner to the desired hydrogenation ratio of not less than 50 mol% and not more than 80 mol%. The hydrogenation ratio may be preferably controlled by regulating the reaction rate through appropriate selection of the amount of the catalyst, the hydrogen pressure and the reaction temperature. In general, the reaction rate is lowered with decreasing amount of the catalyst, or with decreasing hydrogen pressure and/or reaction temperature. The hydrogen pressure is preferably 0.1 to 20 MPa, and more preferably 0.1 to 10 MPa. The reaction temperature is preferably 20 to 250°C, more preferably 20 to 150°C, and still more preferably 20 to 120°C. When the hydrogenation catalyst that is used is composed of a transition metal compound and an alkylaluminum compound, the amount in which such a hydrogenation catalyst is used is preferably such that the amount of the transition metal compound constituting the hydrogenation catalyst is in the range of $1.0 \times 10^{-6}$ to $1.0 \times 10^{-1}$ molar times the number of moles of the carbon-carbon double bonds present in the conjugated diene units. A polar compound may be added for the purpose of controlling the activity of the hydrogenation catalyst. Examples of the polar compounds which may be added include amine compounds such as N,N,N',N'-tetramethylethylenediamine, and alcohols. The reaction time is usually 0.1 to 100 hours.

From the points of view of storage stability and transparency, the concentration of the hydrogenation catalyst contained in the random copolymer (B) after the hydrogenation is preferably less than 500 ppm, more preferably less than 100 ppm, still more preferably less than 20 ppm, and particularly preferably less than 10 ppm in terms of the concentration of the central metal element. For example, the concentration of the metal element in a sample may be measured by atomic absorption spectroscopy or ICP emission spectroscopy. Generally, the hydrogenation catalyst is deactivated with a polar compound and is thereafter removed by water washing optionally in the presence of an acid or a salt as a cleaning agent.

The hydrogenation ratio of the conjugated diene units constituting the random copolymer (B) is not less than 50 mol% and preferably not less than 70 mol%. From the point of view of enhancement in tensile breaking strength, the hydrogenation ratio of the conjugated diene units constituting the random copolymer (B) is not more than 80 mol%.

To enhance the compatibility between the random copolymer (B) and the solid rubber (A) and to reduce deterioration in mechanical properties and grip performance over time due to bleedout, the hydrogenation ratio of the conjugated diene units constituting the random copolymer (B) is not more than 80 mol% and preferably not more than 70 mol%.

From points of view such as enhancements in grip performance and in compatibility between the random copolymer (B) and the solid rubber (A), the hydrogenation ratio of the random copolymer (B) is preferably not less than 20% and not more than 90%, more preferably not less than 30% and not more than 80%, and still more preferably not less than 50% and not more than 70%.

In all the monomer units constituting the random copolymer (B), the content of the aromatic vinyl compound (b2) units is not less than 39 mass% and preferably not less than 45 mass%. The content of the aromatic vinyl compound (b2) units is not more than 55 mass%. The content of the aromatic vinyl compound (b2) units in the random copolymer (B) may be controlled by, for example, manipulating the content of the aromatic vinyl compound (b2) units in the unhydrogenated random copolymer (B') to fall in the desired range described above.

In all the monomer units constituting the random copolymer (B), the content of the conjugated diene units may be 30 to 90 mass%, preferably 40 to 85 mass%, and more preferably 60 to 80 mass%. The content of the conjugated diene units in the random copolymer (B) may be controlled by, for example, manipulating the content of the conjugated diene units in the unhydrogenated random copolymer (B') to fall in the desired range described above.

The vinyl content in the conjugated diene units in the unhydrogenated random copolymer (B') is 30 to 65 mol% and preferably 40 to 60 mol%. In the present invention, the "vinyl content" means the total molar percentage of 1,2-bonded or 3,4-bonded conjugated diene units (conjugated diene units except 1,4-bonded conjugated diene units) relative to the total of isoprene units, butadiene units and conjugated diene (b1) units other than isoprene and butadiene units in the unhydrogenated random copolymer (B') taken as 100 mol%. The vinyl content may be determined by $^{1}H$-NMR based on the area ratio of the peaks assigned to 1,2-bonded or 3,4-bonded conjugated diene units and the peak assigned to 1,4-bonded conjugated diene units.

The vinyl content in the random copolymer (B) may be brought to a desired value by, for example, selecting the types of a solvent and an optional polar compound used in the production of the unhydrogenated random copolymer (B'), or controlling the production conditions such as polymerization temperature.

The weight average molecular weight (Mw) of the random copolymer (B) is not less than 7,500. The weight average molecular weight (Mw) of the random copolymer (B) is not more than 20,000. In the present invention, the Mw of the hydrogenated aromatic vinyl-conjugated diene random copolymer (B) is the polystyrene-equivalent weight average molecular weight determined by gel permeation chromatography (GPC) measurement. If the Mw is excessively low, the rubber may not be effectively reinforced (for example, enhanced in tensile strength) or, in a worse case, may be deteriorated in such properties. If the Mw is excessively high, the processability of the rubber composition may not be effectively enhanced or, in a worse case, may be deteriorated.

The molecular weight distribution (Mw/Mn) of the random copolymer (B) is preferably 1.0 to 20.0, more preferably 1.0 to 15.0, still more preferably 1.0 to 10.0, even more preferably 1.0 to 5.0, further preferably 1.0 to 2.0, furthermore preferably 1.0 to 1.3, and particularly preferably 1.0 to 1.1. When the Mw/Mn is in the above range, the hydrogenated aromatic vinyl-conjugated diene random copolymer (B) that is obtained advantageously has a small variation in viscosity. The molecular weight distribution (Mw/Mn) means the ratio of the weight average molecular weight (Mw) to the number average molecular weight (Mn) measured by GPC relative to standard polystyrenes.

The melt viscosity of the random copolymer (B) measured at 38°C is preferably 0.1 to 2,000 Pa·s, more preferably 0.1 to 1500 Pa·s, still more preferably 0.1 to 1000 Pa·s, even more preferably 0.1 to 500 Pa·s, further preferably 0.1 to 250 Pa·s, particularly preferably 0.1 to 100 Pa·s, and most preferably 0.1 to 50 Pa·s. When the melt viscosity of the random copolymer (B) is in the above range, the rubber composition that is obtained attains enhanced flexibility and thus exhibits higher processability. In the present invention, the melt viscosity of the random copolymer (B) is a value measured with a Brookfield viscometer at 38°C.

The glass transition temperature (Tg) of the random copolymer (B) is preferably not more than 20°C. The glass transition temperature (Tg) is variable depending on factors such as the vinyl content in the isoprene units, butadiene units and conjugated diene (b1) units, the type of the conjugated diene (b1) and the content of units derived from monomers other than the conjugated dienes, but, from the points of view of abrasion resistance, ice grip performance and rolling resistance performance, is more preferably not more than 10°C, still more preferably not more than 0°C, and further preferably not more than - 10°C.

The random copolymers (B) may be used singly, or two or more may be used in combination.

In the random copolymer (B), the catalyst residue content ascribed to the polymerization catalyst used in the production of the copolymer is preferably in the range of 0 to 200 ppm in terms of metal. When, for example, the polymerization catalyst used for the production of the unhydrogenated random copolymer (B'), which is the raw material for the random copolymer (B), is an organoalkali metal such as an organolithium compound, the metal based on which the catalyst residue content is determined is the alkali metal such as lithium. The catalyst residue content in the above range ensures that a decrease in tackiness during processing or the like will be avoided and that the rubber composition of the present invention will give crosslinked products attaining enhancements in heat resistance and rolling resistance performance of tires. The catalyst residue content ascribed to the polymerization catalyst used in the production of the random copolymer (B) is more preferably 0 to 150 ppm, and still more preferably 0 to 100 ppm in terms of metal. The catalyst residue content may be measured with, for example, a polarized Zeeman atomic absorption spectrophotometer.

For example, the catalyst residue content in the random copolymer may be controlled to the above specific range by purifying the random copolymer (B) or the unhydrogenated random copolymer (B') as the raw material to remove sufficiently the catalyst residue. The purification method is preferably washing with water or warm water, an organic solvent such as methanol or acetone, or supercritical fluid carbon dioxide. From the economic viewpoint, the number of washing operations is preferably 1 to 20 times, and more preferably 1 to 10 times. The washing temperature is preferably 20 to 100°C, and more preferably 40 to 90°C. Prior to the polymerization reaction, the monomers may be purified by distillation or with an adsorbent to remove impurities that will inhibit the polymerization. Such purification allows the polymerization to take place with a reduced amount of the polymerization catalyst, thus making it possible to reduce the catalyst residue content. From the similar viewpoint, the catalyst residue content in the inventive rubber composition including the solid rubber (A), the random copolymer (B) and the filler (C) is preferably 0 to 200 ppm, more preferably 0 to 150 ppm, and still more preferably 0 to 100 ppm in terms of metal. In this case, the catalyst residue content may include a catalyst residue content ascribed to the polymerization catalyst used in the production of the solid rubber (A), the random copolymer (B) and/or other components optionally used in the rubber composition.

In the rubber composition of the present invention, the content of the random copolymer (B) is preferably 0.1 to 50 parts by mass, more preferably 0.1 to 45 parts by mass, and still more preferably 0.5 to 40 parts by mass per 100 parts by mass of the solid rubber (A). This content of the random copolymer (B) ensures that the filler (C) will attain enhanced dispersibility in the rubber composition and that crosslinked products which are obtained will exhibit enhanced abrasion resistance and, when used in, for example, tires and the like, will show sufficient dry grip performance plus outstanding wet grip performance and ice grip performance as well as other good performances such as steering stability.

[Fillers (C)]

The filler (C) used in the rubber composition of the present invention is not particularly limited and may be any of fillers generally used in rubber compositions. For purposes such as to improve properties, for example, mechanical strength and to ensure that products, for example, tires including the rubber composition at least as portions thereof will attain enhancements in dry grip performance, wet grip performance, steering stability and low fuel consumption performance, the filler (C) is preferably at least one selected from carbon blacks and silicas.

Examples of the carbon blacks include furnace blacks, channel blacks, thermal blacks, acetylene blacks and Ketjen blacks. For purposes such as to enhance the crosslinking rate, to enhance the mechanical strength of crosslinked products which are obtained, and to ensure that products, for example, tires including the rubber composition at least as portions thereof will have enhanced dry grip performance, wet grip performance, steering stability and low fuel consumption performance, furnace blacks are preferable among the above carbon blacks. The carbon blacks may be used singly, or two or more may be used in combination.

To ensure that products, for example, tires including the rubber composition as portions thereof will attain enhancements in dry grip performance, wet grip performance and low fuel consumption performance, the average particle diameter of the carbon blacks is preferably not less than 5 nm, more preferably not less than 10 nm, and still more preferably not less than 15 nm, and is preferably not more than 100 nm, more preferably not more than 80 nm, still more preferably not more than 70 nm, and further preferably not more than 60 nm. The average particle diameter of the carbon blacks may be determined by measuring the diameters of the particles with a transmission electron microscope and calculating the average of the diameters.

Examples of the commercially available furnace blacks include "DIABLACK" manufactured by Mitsubishi Chemical Corporation and "SEAST" manufactured by Tokai Carbon Co., Ltd. Examples of the commercially available acetylene blacks include "DENKA BLACK" manufactured by Denka Company Limited. Examples of the commercially available Ketjen blacks include "ECP600JD" manufactured by Lion Specialty Chemicals Co., Ltd.

To attain enhancements in properties such as the wettability and dispersibility with respect to the solid rubber (A), the carbon blacks may be treated with acids such as nitric acid, sulfuric acid, hydrochloric acid and mixed acids of these acids, or may be subjected to surface oxidation treatment by heating in the presence of air. To enhance the mechanical strength of the inventive rubber composition and crosslinked products obtained from the composition, the carbon blacks may be heat treated at 2,000 to 3,000°C in the presence of a graphitization catalyst. Preferred examples of the graphitization catalysts include boron, boron oxides (for example, $B_2O_2$, $B_2O_3$, $B_4O_3$ and $B_4O_5$) , boron oxoacids (for example, orthoboric acid, metaboric acid and tetraboric acid) and salts thereof, boron carbides (for example, $B_4C$ and $B_6C$), boron nitride (BN) and other boron compounds.

The carbon blacks may be used after their grain size is adjusted by a technique such as crushing. Examples of the grinders which may be used for the crushing of the carbon blacks include high-speed rotary crushers (hammer mills, pin mills and cage mills), various ball mills (rotary mills, vibration mills and planetary mills) and stirring mills (bead mills, Attritor mills, flow tube type mills and annular mills).

Examples of the silicas include wet silicas (hydrous silicates), dry silicas (silicic anhydrides), calcium silicates and aluminum silicates. Of these silicas, wet silicas are preferable to attain further enhancements in processability and in the mechanical strength and abrasion resistance of crosslinked products which are obtained, and also to ensure that products, for example, tires including the rubber composition at least as portions thereof will attain further enhancements in dry grip performance, wet grip performance, steering stability and low fuel consumption performance. The silicas may be used singly, or two or more may be used in combination.

To attain enhancements in the processability of the rubber composition, and also to ensure that products, for example, tires including the rubber composition at least as portions thereof will attain enhancements in dry grip performance, wet grip performance and low fuel consumption performance, the average particle diameter of the silicas is preferably not less than 0.5 nm, more preferably not less than 2 nm, still more preferably not less than 5 nm, further preferably not less than 8 nm, and particularly preferably not less than 10 nm, and is preferably not more than 200 nm, more preferably not more than 150 nm, still more preferably not more than 100 nm, further preferably not more than 50 nm, particularly preferably not more than 30 nm, and most preferably not more than 20 nm. The average particle diameter of the silicas may be determined by measuring the diameters of the particles with a transmission electron microscope and calculating the average of the diameters.

Of the carbon blacks and the silicas described above, the silicas are more preferable as the fillers (C) from points of view such as enhancing the rolling resistance performance of the obtainable rubber composition and crosslinked products thereof.

In the present invention, the rubber composition may include a filler other than silicas and carbon blacks for purposes such as to enhance the mechanical strength of tires including the rubber composition at least as portions thereof, and to improve production costs by adding the filler as an extender.

Examples of the fillers other than silicas and carbon blacks include organic fillers, and inorganic fillers such as clays, talcs, micas, calcium carbonate, magnesium hydroxide, aluminum hydroxide, barium sulfate, titanium oxides, glass fibers, fibrous fillers and glass balloons. These fillers may be used singly, or two or more may be used in combination.

The amount of the filler (C) is preferably 20 to 200 parts by mass per 100 parts by mass of the solid rubber (A). When the amount of the filler (C) is in this range, products, for example, tires including the rubber composition at least as portions thereof attain enhancements in dry grip performance, wet grip performance and low fuel consumption performance. From the above point of view, the amount of the filler (C) per 100 parts by mass of the solid rubber (A) is more preferably not less than 30 parts by mass, still more preferably not less than 40 parts by mass, further preferably not less than 50 parts by mass, and particularly preferably not less than 60 parts by mass, and is preferably not more than 150 parts by mass, more preferably not more than 120 parts by mass, still more preferably not more than 100 parts by mass, even more preferably not more than 90 parts by mass, further preferably not more than 80 parts by mass, and particularly preferably not more than 70 parts by mass.

When the silica is used as the filler (C), the amount of the silica per 100 parts by mass of the solid rubber (A) is preferably not less than 20 parts by mass, more preferably not less than 25 parts by mass, still more preferably not less than 30 parts by mass, further preferably not less than 35 parts by mass, particularly preferably not less than 40 parts by mass, and most preferably not less than 45 parts by mass, and is preferably not more than 100 parts by mass, more preferably not more than 90 parts by mass, still more preferably not more than 80 parts by mass, even more preferably not more than 70 parts by mass, further preferably not more than 65 parts by mass, particularly preferably not more than 60 parts by mass, and most preferably not more than 55 parts by mass, from the point of view of ensuring that products, for example, tires including the rubber composition at least as portions thereof will attain enhancements in dry grip performance, wet grip performance and low fuel consumption performance.

When the carbon black is used as the filler (C), the amount of the carbon black per 100 parts by mass of the solid rubber (A) is preferably not less than 10 parts by mass, more preferably not less than 20 parts by mass, still more preferably not less than 30 parts by mass, and particularly preferably not less than 40 parts by mass, and is preferably not more than 120 parts by mass, more preferably not more than 100 parts by mass, still more preferably not more than 80 parts by mass, even more preferably not more than 70 parts by mass, further preferably not more than 60 parts by mass, particularly preferably not more than 55 parts by mass, and most preferably not more than 50 parts by mass, from the point of view of ensuring that products, for example, tires including the rubber composition at least as portions thereof will attain enhancements in dry grip performance, wet grip performance and low fuel consumption performance.

When the silica and the carbon black are used in combination, the ratio of the silica to the carbon black (mass ratio = silica/carbon black) is preferably 1/99 to 99/1, more preferably 10/90 to 90/10, and still more preferably 30/70 to 80/20.

[Additional components]

When the rubber composition of the present invention includes silica or the like as the filler (C), it is preferable that the composition further include a silane coupling agent. Examples of the silane coupling agents include sulfide compounds, mercapto compounds, vinyl compounds, amino compounds, glycidoxy compounds, nitro compounds and chloro compounds.

Examples of the sulfide compounds include bis(3-triethoxysilylpropyl) tetrasulfide, bis(2-triethoxysilylethyl) tetrasulfide, bis(3-trimethoxysilylpropyl) tetrasulfide, bis(2-trimethoxysilylethyl) tetrasulfide, bis(3-triethoxysilylpropyl) trisulfide, bis(3-trimethoxysilylpropyl) trisulfide, bis(3-triethoxysilylpropyl) disulfide, bis(3-trimethoxysilylpropyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide and 3-octanoylthio-1-propyltriethoxysilane.

Examples of the mercapto compounds include 3-mercaptopropyltrimethoxysilane, 3-mercaptopropyltriethoxysilane, 2-mercaptoethyltrimethoxysilane and 2-mercaptoethyltriethoxysilane.

Examples of the vinyl compounds include vinyltriethoxysilane and vinyltrimethoxysilane.

Examples of the amino compounds include 3-aminopropyltriethoxysilane, 3-aminopropyltrimethoxysilane, 3-(2-aminoethyl)aminopropyltriethoxysilane and 3-(2-aminoethyl)aminopropyltrimethoxysilane.

Examples of the glycidoxy compounds include $\gamma$-glycidoxypropyltriethoxysilane, $\gamma$-glycidoxypropyltrimethoxysilane, $\gamma$-glycidoxypropylmethyldiethoxysilane and $\gamma$-glycidoxypropylmethyldimethoxysilane.

Examples of the nitro compounds include 3-nitropropyltrimethoxysilane and 3-nitropropyltriethoxysilane.

Examples of the chloro compounds include 3-chloropropyltrimethoxysilane, 3-chloropropyltriethoxysilane, 2-chloroethyltrimethoxysilane and 2-chloroethyltriethoxysilane.

Other compounds may be also used, with examples including octyltriethoxysilane, methyltriethoxysilane, methyltrimethoxysilane and hexadecyltrimethoxysilane.

The silane coupling agents may be used singly, or two or more may be used in combination. Of the above silane coupling agents, sulfur-containing silane coupling agents such as sulfide compounds and mercapto compounds are preferable because of their high reinforcing effects, and bis(3-triethoxysilylpropyl) disulfide, bis(3-triethoxysilylpropyl) tetrasulfide and 3-mercaptopropyltrimethoxysilane are more preferable.

The silane coupling agent is preferably added in an amount of 0.1 to 30 parts by mass, more preferably 0.5 to 20 parts by mass, and still more preferably 1 to 15 parts by mass per 100 parts by mass of the filler (C). This content of the silane coupling agent ensures that dispersibility, coupling effects, reinforcing effects and abrasion resistance will be enhanced.

The rubber composition of the present invention may further contain a vulcanizing agent (D) to crosslink the rubber in the composition. Examples of the vulcanizing agents (D) include sulfur and sulfur compounds. Examples of the sulfur compounds include morpholine disulfides and alkylphenol disulfides. The vulcanizing agents (D) may be used singly, or two or more may be used in combination. From the point of view of mechanical properties of crosslinked products, the vulcanizing agent (D) is usually added in an amount of 0.1 to 10 parts by mass, preferably 0.5 to 10 parts by mass, and more preferably 0.8 to 5 parts by mass per 100 parts by mass of the solid rubber (A) .

When, for example, the rubber composition of the present invention contains the vulcanizing agent (D) for crosslinking (vulcanizing) the rubber, the composition may further include a vulcanization accelerator (E). Examples of the vulcanization accelerators (E) include guanidine compounds, sulfenamide compounds, thiazole compounds, thiuram compounds, thiourea compounds, dithiocarbamic acid compounds, aldehyde-amine compounds, aldehyde-ammonia compounds, imidazoline compounds and xanthate compounds. The vulcanization accelerators (E) may be used singly, or two or more may be used in combination. The vulcanization accelerator (E) is usually added in an amount of 0.1 to 15 parts by mass, and preferably 0.1 to 10 parts by mass per 100 parts by mass of the solid rubber (A).

When, for example, the rubber composition of the present invention contains sulfur, a sulfur compound or the like as the vulcanizing agent (D) for crosslinking (vulcanizing) the rubber, the composition may further include a vulcanization aid (F). Examples of the vulcanization aids (F) include fatty acids such as stearic acid, metal oxides such as zinc oxide, and fatty acid metal salts such as zinc stearate. The vulcanization aids (F) may be used singly, or two or more may be used in combination. The vulcanization aid (F) is usually added in an amount of 0.1 to 15 parts by mass, and preferably 1 to 10 parts by mass per 100 parts by mass of the solid rubber (A) .

Besides the vulcanizing agents, crosslinking agents may be added to the rubber composition. Examples of the crosslinking agents include oxygen, organic peroxides, phenolic resins, amino resins, quinone and quinone dioxime derivatives, halogen compounds, aldehyde compounds, alcohol compounds, epoxy compounds, metal halides, organometal halides and silane compounds. These may be used singly, or two or more may be used in combination. The amount of the crosslinking agent is preferably 0.1 to 10 parts by mass per 100 parts by mass of the solid rubber (A) .

Where necessary, the rubber composition of the present invention may include a softener in order to attain improvements in properties such as processability and fluidity while still ensuring that the advantageous effects of the invention are not impaired. Examples of the softeners include process oils such as silicone oils, aromatic oils, TDAEs (treated distilled aromatic extracts), MESs (mild extracted solvates), RAEs (residual aromatic extracts), paraffin oils and naphthenic oils, and resin components such as aliphatic hydrocarbon resins, alicyclic hydrocarbon resins, C9 resins, rosin resins, coumarone-indene resins and phenolic resins. When the rubber composition of the present invention contains the process oil as the softener, the content thereof from the point of view of bleeding resistance is preferably not more than 50 parts by mass, more preferably not more than 30 parts by mass, and still more preferably not more than 15 parts by mass per 100 parts by mass of the solid rubber (A) .

The rubber composition of the present invention may contain additives as required in order to attain enhancements in properties such as weather resistance, heat resistance and oxidation resistance, while still achieving the advantageous effects of the invention. Examples of such additives include antioxidants, oxidation inhibitors, waxes, lubricants, light stabilizers, scorch inhibitors, processing aids, colorants such as pigments and coloring matters, flame retardants, antistatic agents, matting agents, antiblocking agents, UV absorbers, release agents, foaming agents, antibacterial agents, mildew-proofing agents and perfumes.

Examples of the oxidation inhibitors include hindered phenol compounds, phosphorus compounds, lactone compounds and hydroxyl compounds.

Examples of the antioxidants include amine-ketone compounds, imidazole compounds, amine compounds, phenolic compounds, sulfur compounds and phosphorus compounds. The additives may be used singly, or two or more may be used in combination.

[Methods for producing rubber compositions]

The rubber composition of the present invention may be produced by any methods without limitation as long as the components described hereinabove can be mixed together homogeneously. Examples of the apparatuses used in the production of the rubber composition include tangential or intermeshing internal kneaders such as kneader-ruders, Brabender mixers, Banbury mixers and internal mixers, single-screw extruders, twin-screw extruders, mixing rolls and rollers. The production of the rubber composition may be usually carried out at a temperature in the range of 50 to 270°C.

The rubber composition of the present invention is preferably used as a crosslinked product (vulcanized rubber) by being crosslinked. The vulcanization conditions and methods are not particularly limited, but the composition is preferably vulcanized with a vulcanization mold under conditions where the vulcanization temperature is 120 to 200°C and the vulcanization pressure is 0.5 to 20 MPa.

The crosslinked products are preferably such that the random copolymer (B) is extracted therefrom with an extraction ratio of not more than 20 mass%, more preferably not more than 15 mass%, and still more preferably not more than 10 mass%.

The extraction ratio may be calculated by soaking 2 g of the crosslinked product into 400 ml of toluene at 23°C for 48 hours and determining the amount of the random copolymer (B) extracted into toluene.

[Pneumatic tires]

A pneumatic tire of the present invention includes the rubber composition at least as a portion thereof. The pneumatic tire of the present invention, by virtue of its containing the rubber composition at least as a portion thereof, has sufficient dry grip performance plus excellent wet grip performance and ice grip performance, and exhibits enhanced steering stability and outstanding abrasion resistance. Thus, the pneumatic tires are suited as snow tires such as winter tires and studless tires, all-season tires, summer tires, and competition tires such as race tires.

Examples of the portions of tires in which the rubber composition and crosslinked products of the rubber composition may be used include treads (cap treads, undertreads), sidewalls, rubber reinforcing layers (such as liners) for runflat tires, rim cushions, bead fillers, bead insulations, bead apexes, clinch apexes, belts, belt cushions, breakers, breaker cushions, chafers, chafers pads and strip apexes.

EXAMPLES

The present invention will be described in further detail by presenting Examples hereinbelow without limiting the scope of the present invention to such Examples.

The following are the components used in Examples and Comparative Examples.

(Components (A))

SBR (1): Oil-extended emulsion-polymerized styrene butadiene rubber (emulsion-polymerized SBR), JSR 1723 (manufactured by JSR Corporation), weight average molecular weight: 480,000, styrene content: 23.5 mass%, glass transition temperature: -53°C, oil: 37.5 parts by mass

SBR (2): Oil-extended solution-polymerized styrene butadiene rubber (solution-polymerized SBR), TUFDENE E580 (manufactured by Asahi Kasei Corporation), weight average molecular weight: 1,700,000, styrene content: 35.5 mass%, glass transition temperature: -31°C, oil: 37.5 parts by mass

BR: Butadiene rubber, BR01 (manufactured by JSR Corporation), high cis type [1,4-cis bonds: 95%], weight average molecular weight: 520,000, glass transition temperature: -103°C

⟨Components (B)⟩

Hydrogenated aromatic vinyl-conjugated diene random copolymers obtained in Production Examples 3 and 5 to 10 described later

⟨Components (C)⟩

Silica: ULTRASIL 7000GR (wet silica) manufactured by Evonik Degussa Japan, average particle diameter: 14 nm

Carbon black: DIABLACK N234 manufactured by Mitsubishi Chemical Corporation, average particle diameter: 22 nm

(Component (X))

The following component (X) was used as a makeup for the comparison of the components (B).
TDAE: VivaTec 500 manufactured by H&R

(Other components)

Silane coupling agent: Si-75 manufactured by Evonik Degussa Japan
Sulfur: Sulfur fine powder 200 mesh manufactured by Tsurumi Chemical Industry Co., Ltd.
Vulcanization accelerator (1): Nocceler CZ-G manufactured by Ouchi Shinko Chemical Industrial Co., Ltd.
Vulcanization accelerator (2): Nocceler D manufactured by Ouchi Shinko Chemical Industrial Co., Ltd.
Vulcanization accelerator (3): Nocceler TBT-N manufactured by Ouchi Shinko Chemical Industrial Co., Ltd.
Stearic acid: LUNAC S-20 manufactured by Kao Corporation
Zinc oxide: Zinc oxide manufactured by Sakai Chemical Industry Co., Ltd.
Antioxidant (1): Nocrac 6C manufactured by Ouchi Shinko Chemical Industrial Co., Ltd.
Antioxidant (2): ANTAGE RD manufactured by Kawaguchi Chemical Industry Co., LTD.
Wax: SUNTIGHT S manufactured by Seiko Chemical Co., Ltd.

Properties of materials obtained in Production Examples such as aromatic vinyl-conjugated diene random copolymers and hydrogenated aromatic vinyl-conjugated diene random copolymers were measured and calculated by the following methods.

(Method for measuring weight average molecular weight (Mw) and molecular weight distribution (Mw/Mn))

The weight average molecular weight (Mw) and number average molecular weight (Mn) of the polymers were measured by GPC (gel permeation chromatography) relative to standard polystyrenes. The molecular weight distribution (Mw/Mn) was calculated from these values of molecular weights. The measurement involved the following apparatus and conditions.

·Apparatus: GPC apparatus "GPC 8020" manufactured by TOSOH CORPORATION
·Separation column: "TSKgel G4000HXL" manufactured by TOSOH CORPORATION
·Detector: "RI-8020" manufactured by TOSOH CORPORATION
·Eluent: Tetrahydrofuran
·Eluent flow rate: 1.0 mL/min
·Sample concentration: 5 mg/10 mL
·Column temperature: 40°C

(Content of aromatic vinyl units)

The content of aromatic vinyl units was measured with $^1$H-NMR (500 MHz) manufactured by JEOL Ltd. The concentration was sample/deuterated chloroform = 50 mg/1 mL. The number of scans was 1024. With respect to the spectrum obtained, the peak at 6.00 to 7.95 ppm was assigned to aromatic vinyl, and the content of aromatic vinyl units was calculated from the area ratio of that peak to the peak assigned to double bonds derived from the diene compound. Further, the content of conjugated diene units was calculated from the content of aromatic vinyl units.

(Vinyl content before hydrogenation)

Before the random copolymer was hydrogenated, the vinyl content in the conjugated diene units was measured with $^1$H-NMR (500 MHz) manufactured by JEOL Ltd. The concentration was sample/deuterated chloroform = 50 mg/1 mL. The number of scans was 1024. With respect to the spectrum obtained, the vinyl content (mol%) was calculated from the area ratio of the peak assigned to double bonds derived from the vinylated diene compound to the peak assigned to double bonds derived from the non-vinylated diene compound.

For example, the vinyl content in butadiene units was calculated as follows. In the chart obtained by the above measurement, the portion ranging from 4.85 to 4.94 ppm was analyzed as the spectrum assigned to vinyl structures, and the portion ranging from 5.22 to 5.65 ppm was analyzed as the synthetic spectrum of vinyl structures and 1,4-bonds. The vinyl content was calculated from the following equation.

{Vinyl content (butadiene units)} = Integral of 4.85 to 4.94 ppm/2/{Integral of 4.85 to 4.94 ppm/2 + [Integral of 5.22 to 5.65 ppm - (Integral of 4.85 to 4.94 ppm/2)]/2}

Specifically, in Table 1, the vinyl contents of hydrogenated aromatic vinyl-conjugated diene random copolymers (B-2) and (B-3-1) to (B-3-5) are the vinyl contents in the conjugated diene units before hydrogenation, and the vinyl contents of aromatic vinyl-conjugated diene random copolymers (B'-1) to (B'-3), which were not hydrogenated, are the vinyl contents in the conjugated diene units as they were.

(Hydrogenation ratio)

Measurement was performed with $^1$H-NMR (500 MHz) manufactured by JEOL Ltd. The concentration was sample/deuterated chloroform = 100 mg/1 mL. The number of scans was 512. The measurement temperature was 50°C. With respect to the spectrum obtained, the hydrogenation ratio (mol%) was calculated from the area ratio of the peak assigned to saturated hydrocarbon derived from the hydrogenated or unhydrogenated conjugated diene compound, to the peak assigned to double bonds derived from the unhydrogenated conjugated diene compound.

(Glass transition temperature)

A 10 mg portion of the polymer was placed into an aluminum pan and was analyzed by differential scanning calorimetry (DSC) at a heat-up rate of 10°C/min. With respect to the thermogram obtained, the peak top value of the DDSC curve was adopted as the glass transition temperature (Tg).

Production Example 1: Production of aromatic vinyl-conjugated diene random copolymer (B'-1)

A pressure vessel which had been purged with nitrogen and dried was charged with 750 g of cyclohexane as a solvent, 62.9 g of sec-butyllithium (10.5 mass% cyclohexane solution) as a polymerization initiator and 5.9 g of N,N,N',N'-tetramethylethylenediamine as a polar compound. After the temperature was raised to 50°C, a liquid mixture prepared beforehand by mixing 105 g of styrene and 395 g of butadiene was added at 5 mL/min to perform polymerization for 2.5 hours. The polymerization was terminated by the addition of 4 g of methanol to the polymerization reaction liquid, and thereafter the polymerization reaction liquid was washed with 2 L of water. After the washing, the polymerization reaction liquid was separated from water and was dried under reduced pressure at 70°C for 12 hours. An aromatic vinyl-conjugated diene random copolymer (B'-1) was thus obtained. Properties of the aromatic vinyl-conjugated diene random copolymer (B'-1) obtained in Production Example 1 are described in Table 1.

Production Example 2: Production of aromatic vinyl-conjugated diene random copolymer (B'-2)

A pressure vessel which had been purged with nitrogen and dried was charged with 750 g of cyclohexane as a solvent, 47.5 g of sec-butyllithium (10.5 mass% cyclohexane solution) as a polymerization initiator and 5.2 g of N,N,N',N'-tetramethylethylenediamine as a polar compound. After the temperature was raised to 50°C, a liquid mixture prepared beforehand by mixing 200 g of styrene and 300 g of butadiene was added at 5 mL/min to perform polymerization for 2.3 hours. The polymerization was terminated by the addition of 3 g of methanol to the polymerization reaction liquid, and thereafter the polymerization reaction liquid was washed with 2 L of water. After the washing, the polymerization reaction liquid was separated from water and was dried under reduced pressure at 70°C for 12 hours. An aromatic vinyl-conjugated diene random copolymer (B'-2) was thus obtained. Properties of the aromatic vinyl-conjugated diene random copolymer (B'-2) obtained in Production Example 2 are described in Table 1.

Production Example 3: Hydrogenated aromatic vinyl-conjugated diene random copolymer (B-2)

In an autoclave, 500 g of the aromatic vinyl-conjugated diene random copolymer (B'-2) obtained in Production Example 2 and 500 g of cyclohexane as a solvent were mixed together, and the temperature was raised to 50°C. Subsequently, a 3:1 by mol mixture of triisobutylaluminum and nickel 2-ethylhexanoate was added as a hydrogenation catalyst in an amount in terms of nickel metal constituting the hydrogenation catalyst of $1.5 \times 10^{-3}$ molar times the number of moles of all the unsaturated bonds present in the polymer. The temperature was then increased to 80°C. The mixture was stirred continuously while supplying hydrogen as needed to keep the hydrogen pressure at 1.0 MPa. Under such conditions, the reaction was carried out for 3 hours to give a hydrogenated aromatic vinyl-conjugated diene random copolymer (B-2). Properties of the hydrogenated aromatic vinyl-conjugated diene random copolymer (B-2) obtained in Production Example 3 are described in Table 1.

Production Example 4: Production of aromatic vinyl-conjugated diene random copolymer (B'-3)

A pressure vessel which had been purged with nitrogen and dried was charged with 1167 g of cyclohexane as a solvent, 49.3 g of sec-butyllithium (10.5 mass% cyclohexane solution) as a polymerization initiator and 10.4 g of tetrahydrofuran as a polar compound. After the temperature was raised to 50°C, a liquid mixture prepared beforehand by mixing 255 g of styrene and 245 g of butadiene was added at 5 mL/min to perform polymerization for 2.5 hours. The polymerization was terminated by the addition of 3.2 g of methanol to the polymerization reaction liquid, and thereafter the polymerization reaction liquid was washed with 2 L of water. After the washing, the polymerization reaction liquid was separated from water and was dried under reduced pressure at 70°C for 12 hours. An aromatic vinyl-conjugated diene random copolymer (B'-3) was thus obtained. Properties of the aromatic vinyl-conjugated diene random copolymer (B'-3) obtained in Production Example 4 are described in Table 1.

Production Examples 5 to 10: Hydrogenated aromatic vinyl-conjugated diene random copolymers (B-3-1) to (B-3-6)

In an autoclave, 500 g of the aromatic vinyl-conjugated diene random copolymer (B'-3) obtained in Production Example 4 and 500 g of cyclohexane as a solvent were mixed together, and the temperature was raised to 50°C. Subsequently, a 3:1 by mol mixture of triisobutylaluminum and nickel 2-ethylhexanoate was added as a hydrogenation catalyst in an amount in terms of nickel metal constituting the hydrogenation catalyst of $1.5 \times 10^{-3}$ molar times the number of moles of all the unsaturated bonds present in the polymer. The temperature was then increased to 80°C. The mixture was stirred continuously while supplying hydrogen as needed to keep the hydrogen pressure at 1.0 MPa. The supply of hydrogen was stopped after an appropriate lapse of time to terminate the reaction. In this manner, hydrogenated aromatic vinyl-conjugated diene random copolymers (B-3-1) to (B-3-6) having different hydrogenation degrees were obtained. Properties of the hydrogenated aromatic vinyl-conjugated diene random copolymers (B-3-1) to (B-3-6) obtained are described in Table 1.

[Table 1]

| | | Production Examples | | | | | | | | | |
|---|---|---|---|---|---|---|---|---|---|---|---|
| | | 1 | 2 | 3 | 4 | 5 | 6 | 7 | 8 | 9 | 10 |
| | | B'-1 | B'-2 | B-2 | B'-3 | B-3-1 | B-3-2 | B-3-3 | B-3-4 | B-3-5 | B-3-6 |
| Content (mass%) of aromatic vinyl units | Styrene-derived monomer units | 21 | 40 | 40 | 51 | 51 | 51 | 51 | 51 | 51 | 51 |
| Content (mass%) of conjugated diene units | Butadiene-derived monomer units | 79 | 60 | 60 | 49 | 49 | 49 | 49 | 49 | 49 | 49 |
| Weight average molecular weight (Mw) | | 8,400 | 10,000 | 11,000 | 9,300 | 9,100 | 9,100 | 9,500 | 9,300 | 9,500 | 9,500 |
| Molecular weight distribution (Mw/Mn) | | 1.0 | 1.0 | 1.0 | 1.0 | 1.0 | 1.0 | 1.0 | 1.0 | 1.0 | 1.0 |
| Tg (°C) | | -14 | -6 | -14 | -15 | -13 | -15 | -14 | -15 | -15 | -14 |
| Vinyl content (mol%) before hydrogenation | | 65 | 55 | 55 | 37 | 37 | 37 | 37 | 37 | 37 | 37 |
| Hydrogenation ratio (mol%) | | 0 | 0 | 96 | 0 | 29 | 52 | 66 | 70 | 81 | 99 |

Reference Example 1 and Comparative Examples 1 to 3

From among the hydrogenated aromatic vinyl-conjugated diene random copolymers (B) and the aromatic vinyl-conjugated diene random copolymers (B') obtained above, (B-2), (B'-1) and (B'-2) were used in the preparation of rubber compositions described below. Properties of such rubber compositions were evaluated. Comparative Example 3 did not involve any hydrogenated aromatic vinyl-conjugated diene random copolymers (B).

In accordance with the formulation (parts by mass) described in Table 2, the solid rubbers (A), the random copolymer (B) (or the random copolymer (B')) (except in Comparative Example 3), the fillers (C), the vulcanization aids, the silane coupling agent and other components were added to an internal Banbury mixer and were kneaded together for 6 minutes from a start temperature of 60°C to a resin temperature of 140°C, the kneaded mixture being then removed from the mixer and cooled to room temperature. Next, the mixture was placed into the internal Banbury mixer again, and the vulcanizing agent (sulfur) and the vulcanization accelerators were added. The resultant mixture was kneaded for 75 seconds from a start temperature of 50°C to a maximum temperature of 100°C. Rubber compositions were thus obtained. The results are described in Table 2.

The rubber compositions obtained were subjected to press forming (press conditions: 160°C, 20 to 25 minutes) to give vulcanized sheets (2 mm in thickness) of crosslinked products (vulcanized rubbers), which were then tested by the following methods to measure properties and to evaluate performances.

(Tensile breaking strength)

JIS No. 3 dumbbell-shaped test pieces were punched out from the vulcanized sheets produced in Reference Example 1 and Comparative Examples 1 to 3, and were tested with an Instron tensile tester in accordance with JIS K 6251 to measure the tensile breaking strength (MPa). The larger the value, the higher the breaking characteristics.

(Steering stability)

The vulcanized sheets produced in Reference Example 1 and Comparative Examples 1 to 3 were cut to give test pieces 40 mm in length and 5 mm in width. The test pieces were tested with a dynamic viscoelastometer manufactured by GABO GmbH at a measurement temperature of 25°C, a frequency of 10 Hz, a static strain of 10% and a dynamic strain of 2% to determine the storage modulus E' (MPa) as an index of steering stability. With increasing magnitude of the value, the rubber composition has higher rigidity, exhibits a smaller deformation, and thus offers higher steering stability.

(Wet grip performance)

The vulcanized sheets produced in Reference Example 1 and Comparative Examples 1 to 3 were cut to give test pieces 40 mm in length and 5 mm in width. The test pieces were tested with a dynamic viscoelastometer manufactured by GABO GmbH at a measurement temperature of 0°C, a frequency of 10 Hz, a static strain of 10% and a dynamic strain of 2% to determine tan$\delta$ as an index of wet grip performance. The larger the value, the higher the wet grip performance of the rubber composition. The data described in Table 2 are values relative to the value of Comparative Example 3 taken as 100.

[Table 2]

| | | | Ex. | Comp. Ex. | | |
|---|---|---|---|---|---|---|
| | | | Ref .1 | 1 | 2 | 3 |
| Formulation (parts by mass) | Components (A) | Emulsion-polymerized SBR | 68.5 | 68.5 | 68.5 | 68.5 |
| | | Solution-polymerized SBR | 68.5 | 68.5 | 68.5 | 68.5 |
| | Components (B) | Polymer (B-2) | 10 | | | |
| | | Polymer (B'-1) | | 10 | | |
| | | Polymer (B'-2) | | | 10 | |
| | Components (C) | Silica | 45 | 45 | 45 | 45 |
| | | Carbon black | 45 | 45 | 45 | 45 |
| | Optional components | Silane coupling agent | 3.6 | 3.6 | 3.6 | 3.6 |
| | | Sulfur | 1.5 | 1.5 | 1.5 | 1.5 |
| | | Zinc oxide | 3 | 3 | 3 | 3 |
| | | Stearic acid | 1.5 | 1.5 | 1.5 | 1.5 |
| | | Vulcanization accelerator (1) | 0.35 | 0.35 | 0.35 | 0.35 |
| | | Vulcanization accelerator (2) | 0.5 | 0.5 | 0.5 | 0.5 |

(continued)

| | | | Ex. | Comp. Ex. | | |
|---|---|---|---|---|---|---|
| | | | Ref .1 | 1 | 2 | 3 |
| | | Vulcanization accelerator (3) | 1.5 | 1.5 | 1.5 | 1.5 |
| | | Antioxidant (1) | 1 | 1 | 1 | 1 |
| | | Antioxidant (2) | 1 | 1 | 1 | 1 |
| | | Wax | 1 | 1 | 1 | 1 |
| | Component (X) | TDAE | - | - | - | 10 |
| | Tensile breaking strength | MPa | 22.0 | 20.9 | 21.6 | 20.9 |
| | Steering stability Storage modulus (25°C) | MPa | 7.13 | 6.82 | 7.10 | 6.54 |
| | Wet grip performance tanδ (0°C) | Relative value | 105 | 106 | 105 | 100 |

Reference Example 1 attained enhanced tensile strength as compared to Comparative Example 3 in which TDAE was added in place of the random copolymer (B) for the purpose of improving processability, and Comparative Examples 1 and 2 which involved the unhydrogenated random copolymer (B'). Further, Reference Example 1 resulted in a high storage modulus at 25°C and thus achieved excellent steering stability. Furthermore, Reference Example 1 resulted in enhanced tanδ at 0°C and thus achieved excellent wet grip performance as compared to Comparative Example 3.

Examples 3 to 5, Reference Examples 2, 6, and 7, and Comparative Example 4

From among the hydrogenated aromatic vinyl-conjugated diene random copolymers (B) obtained hereinabove, (B-3-1) to (B-3-6) were used in the preparation of rubber compositions described below. Properties of such rubber compositions were evaluated. Comparative Example 4 did not involve any hydrogenated aromatic vinyl-conjugated diene random copolymers (B).

In accordance with the formulation (parts by mass) described in Table 3, the solid rubbers (A), the random copolymer (B) (except in Comparative Example 4), the filler (C), the vulcanization aids, the silane coupling agent and other components were added to an internal Banbury mixer and were kneaded together for 6 minutes from a start temperature of 60°C to a resin temperature of 140°C, the kneaded mixture being then removed from the mixer and cooled to room temperature. Next, the mixture was placed into the internal Banbury mixer again, and the vulcanizing agent (sulfur) and the vulcanization accelerators were added. The resultant mixture was kneaded for 75 seconds from a start temperature of 50°C to a maximum temperature of 100°C. Rubber compositions were thus obtained.

The rubber compositions obtained were subjected to press forming (press conditions: 160°C, 20 to 25 minutes) to give vulcanized sheets (2 mm in thickness) of crosslinked products (vulcanized rubbers), which were then tested by the similar methods to Reference Example 1 to measure and evaluate the tensile breaking strength, the steering stability and the wet grip performance. The results are described in Table 3. The data of wet grip performance are shown as values relative to the value of Comparative Example 4 taken as 100.

[Table 3]

| | | | Ex. | | | | | | Comp. Ex. |
|---|---|---|---|---|---|---|---|---|---|
| | | | Ref. 2 | 3 | 4 | 5 | Ref. 6 | Ref. 7 | 4 |
| Formulation (parts by mass) | Components (A) | Solution-polymerized SBR | 80 | 80 | 80 | 80 | 80 | 80 | 80 |
| | | BR | 20 | 20 | 20 | 20 | 20 | 20 | 20 |
| | Components (B) | Polymer (B-3-1) | 30 | | | | | | |
| | | Polymer (B-3-2) | | 30 | | | | | |
| | | Polymer (B-3-3) | | | 30 | | | | |
| | | Polymer (B-3-4) | | | | 30 | | | |
| | | Polymer (B-3-5) | | | | | 30 | | |
| | | Polymer (B-3-6) | | | | | | 30 | |
| | Component (C) | Silica | 100 | 100 | 100 | 100 | 100 | 100 | 100 |
| | Optional components | Silane coupling agent | 8 | 8 | 8 | 8 | 8 | 8 | 8 |
| | | Sulfur | 1.9 | 1.9 | 1.9 | 1.9 | 1.9 | 1.9 | 1.9 |
| | | Zinc oxide | 3 | 3 | 3 | 3 | 3 | 3 | 3 |
| | | Stearic acid | 2.5 | 2.5 | 2.5 | 2.5 | 2.5 | 2.5 | 2.5 |
| | | Vulcanization accelerator (1) | 0.35 | 0.35 | 0.35 | 0.35 | 0.35 | 0.35 | 0.35 |
| | | Vulcanization accelerator (2) | 0.5 | 0.5 | 0.5 | 0.5 | 0.5 | 0.5 | 0.5 |
| | | Vulcanization accelerator (3) | 1.5 | 1.5 | 1.5 | 1.5 | 1.5 | 1.5 | 1.5 |
| | | Antioxidant (1) | 2.5 | 2.5 | 2.5 | 2.5 | 2.5 | 2.5 | 2.5 |
| | | Wax | 2 | 2 | 2 | 2 | 2 | 2 | 2 |
| | | TDAE | 10 | 10 | 10 | 10 | 10 | 10 | 40 |
| | Tensile breaking strength | MPa | 22.7 | 21.0 | 21.9 | 22.2 | 20.4 | 18.1 | 21.3 |
| | Steering stability Storage modulus (25°C) | MPa | 6.07 | 6.33 | 5.96 | 6.17 | 6.05 | 5.84 | 5.45 |
| | Wet grip performance tanδ (0°C) | Relative value | 117 | 114 | 114 | 113 | 112 | 112 | 100 |

Examples 3 to 5 and Reference Examples 2, 6, and 7 resulted in a high storage modulus at 25°C and thus achieved excellent steering stability as compared to Comparative Example 4 in which TDAE was added in place of the random copolymer (B) for the purpose of improving processability. Further, tanδ at 0°C was higher and thus excellent wet grip performance was achieved. Furthermore, Examples 3 to 5 and Reference Examples 2, 6, and 7 attained excellent tensile breaking strength. In Reference Example 7, the hydrogenation ratio was high and the tensile breaking strength was low as compared to Comparative Example 4, but enhancements were obtained in steering stability and wet grip performance. Examples 3 to 5 and Reference Examples 2 and 6 attained enhancements in all of tensile breaking strength, steering stability and wet grip performance.

INDUSTRIAL APPLICABILITY

The rubber compositions of the present invention have excellent processability. Further, when rendered crosslinkable by the addition of a crosslinking agent or the like, the rubber compositions give superior crosslinked products which attain enhancements in properties such as tensile strength. Thus, the rubber compositions of the present invention may be suitably used in applications such as tires. In particular, the crosslinked products are useful as tire treads or the like because they offer sufficient steering stability and excellent wet grip performance.

## Claims

**1.** A rubber composition comprising a solid rubber (A), a hydrogenated aromatic vinyl-conjugated diene random copolymer (B), and a filler (C), wherein

the random copolymer (B) satisfies the following (i) to (iv):

(i) the content of aromatic vinyl units is not less than 39 mass% and not more than 55 mass%,
(ii) the vinyl content in conjugated diene units of the random copolymer (B) before hydrogenation is 30 to 65 mol%,
(iii) the hydrogenation ratio of the conjugated diene units is not less than 50 mol% and not more than 80 mol%, and
(iv) the weight average molecular weight is not less than 7,500 and not more than 20,000,

the conjugated diene units of an unhydrogenated aromatic vinyl-conjugated diene random copolymer (B'), which is a raw material of the random copolymer (B), are butadiene monomer units, and
the solid rubber (A) is at least one selected from the group consisting of natural rubbers, SBRs, butadiene rubbers and isoprene rubbers.

**2.** A crosslinked product obtained by crosslinking the rubber composition described in Claim 1.

**3.** A pneumatic tire comprising, at least as a portion of the pneumatic tire, the rubber composition described in Claim 1.

**Patentansprüche**

**1.** Kautschukzusammensetzung, umfassend einen Festkautschuk (A), ein hydriertes, statistisches Copolymer (B) aus aromatischem Vinyl und konjugiertem Dien und einen Füllstoff (C), wobei

das statistische Copolymer (B) die folgenden (i) bis (iv) erfüllt:

(i) der Gehalt an aromatischen Vinyleinheiten beträgt nicht weniger als 39 Massen-% und nicht mehr als 55 Massen-%,
(ii) der Vinylgehalt in den konjugierten Dieneinheiten des statistischen Copolymers (B) vor der Hydrierung beträgt 30 bis 65 Mol-%,
(iii) der Hydrierungsgrad der konjugierten Dieneinheiten beträgt nicht weniger als 50 Mol-% und nicht mehr als 80 Mol-% und
(iv) das gewichtsmittlere Molekulargewicht beträgt nicht weniger als 7.500 und nicht mehr als 20.000,

die konjugierten Dieneinheiten eines unhydrierten, statistischen Copolymers (B') aus aromatischem Vinyl und konjugiertem Dien, das ein Ausgangsmaterial des statistischen Copolymers (B) ist, Butadien-Monomereinheiten sind und
der Festkautschuk (A) mindestens einer ist, ausgewählt aus der Gruppe, bestehend aus Naturkautschuken, SBRs, Butadienkautschuken und Isoprenkautschuken.

**2.** Vernetztes Produkt, erhalten durch Vernetzen der in Anspruch 1 beschriebenen Kautschukzusammensetzung.

**3.** Luftreifen, umfassend, zumindest als einen Teil des Luftreifens, die in Anspruch 1 beschriebene Kautschukzusammensetzung.

**Revendications**

**1.** Composition de caoutchouc comprenant un caoutchouc solide (A), un copolymère aléatoire hydrogéné de vinyle aromatique-diène conjugué (B) et une charge (C), dans laquelle

le copolymère aléatoire (B) satisfait les points (i) à (iv) suivants :

(i) la teneur en unités de vinyle aromatique n'est pas inférieure à 39 % en masse et pas supérieure à 55 % en masse,
(ii) la teneur en vinyle dans les unités de diène conjugué du copolymère aléatoire (B) avant hydrogénation est de 30 à 65 % en mol,
(iii) le rapport d'hydrogénation des unités de diène conjugué n'est pas inférieur à 50 % en mol et pas supérieur à 80 % en mol, et
(iv) le poids moléculaire moyen en poids n'est pas inférieur à 7500 et pas supérieur à 20 000,

les unités de diène conjugué d'un copolymère aléatoire non hydrogéné de vinyle aromatique-diène conjugué (B') qui est une matière première du copolymère aléatoire (B) sont des unités monomères de butadiène, et
le caoutchouc solide (A) est au moins un sélectionné parmi le groupe constitué de caoutchoucs naturels, SBR, caoutchoucs de butadiène et caoutchoucs d'isoprène.

**2.** Produit réticulé obtenu en réticulant la composition de caoutchouc décrite à la revendication 1.

**3.** Bandage pneumatique comprenant, au moins en tant que portion du bandage pneumatique, la composition de caoutchouc décrite à la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007081026 A
- JP 2011153219 A
- JP 2006213807 A
- US 2017240731 A1
- EP 1975199 A1
- EP 3070120 A1
- EP 1535959 A2
- EP 1544241 A1
- EP 1612241 A1
- EP 3385318 A1
- EP 3326838 A1
- EP 1514901 A1
- JP 2005225946 A
- JP 2018177920 A
- JP 2008274120 A
- JP 2007161817 A
- JP 2008184517 A
- JP 2006213809 A
- JP 2008231207 A
- JP 2011132298 A